# EUROPEAN PATENT APPLICATION

(11) **EP 4 596 224 A1**
(43) Date of publication of application: **06.08.2025**
(21) Application number: 25152879.0
(22) Date of filing: 20.01.2025
(51) Int. Cl.: B29D 11/00, B08B 3/04, B08B 11/02, B29L 11/00

(54) **TRANSPORTATION MODULE FOR A CLEANING MACHINE, RELATED CLEANING MACHINE AND METHOD**

(30) Priority: 30.01.2024 EP 24315034
(71) Applicant: SCL International Special Coating Laboratory, 74160 Archamps (FR)
(72) Inventor: CHABRAND, Michel, 74160 ARCHAMPS (FR)
(74) Representative: Innovincia

(57) **Abstract**

The disclosure relates to a transportation module (1) configured to hold at least an ophthalmic article (3) to be cleaned in a cleaning machine comprising:
- a first plate portion (5) and a second plate portion (15) disposed at a fixed distance for defining a holding space (25),
- at least one ophthalmic article holder (31) protruding into the holding space (25),
- complementary clipping devices (46, 47) carried by the first plate portion (5) and by the second plate portion (15) which are configured to interconnect the transportation module (1) to at least another transportation module to form an assembly of adjacent interconnected transportation modules movable together.

## Description

### FIELD OF THE DISCLOSURE

The present disclosure relates to a transportation module for a cleaning machine configured to clean ophthalmic articles, in particular lenses and a related cleaning machine and method.

### BACKGROUND OF THE DISCLOSURE

The discussion of the background of the disclosure herein is included to explain the context of the disclosure. This is not to be taken as an admission that any of the material referred to was published, known or part of the common general knowledge at the priority date of any of the claims.

Document US2023091347 discloses a cleaning machine where lenses are conveyed by means of a conveying device in a conveying direction through a plurality of horizontally divided cleaning stations and are simultaneously moved back-and-forth parallel to the conveying direction during a cleaning process in the cleaning stations. The conveying device disclosed is an endless, linear and/or chain conveyor.

The drawback of this known cleaning machine is its cumbersome footprint which is not optimized. In addition, by using a chain conveyor, liquids, in particular cleaning agents, may also be transported between the different cleaning stations via the links of the chain. As a consequence, the cleaning machine has an important cleaning agent consumption and cleaning stations dedicated to rinsing or drying may be less performant. In addition, the chain conveyor needs to be equipped with lens holding devices all along, although on the return way, the lens holding devices are idle. Finally, in case of a problem on the chain conveyor, for example when one lens holding device is damaged and must be replaced, the whole cleaning station needs to be stopped during the maintenance.

### SUMMARY OF THE DISCLOSURE

The disclosure aims to overcome at least partially and at least one of the technical problems of the prior art as mentioned above by providing an improved transportation device for a cleaning machine configured to clean ophthalmic articles.

Another independent objective is for example to optimize the footprint of the cleaning machine.

Another independent objective is for example to reduce maintenance time in case for example a lens holder must be replaced.

Hence, an object of the disclosure relates to a transportation module configured to hold at least an ophthalmic article to be cleaned in a cleaning machine comprising:
- a first plate portion having a front end, a back end and two side ends,
- a second plate portion having a front end, a back end and two side ends, the second plate portion being aligned with the first plate portion and disposed at a fixed distance from the first plate portion for defining a holding space between the back end of the first plate portion and the front end of the second plate portion,
- at least one ophthalmic article holder protruding into the holding space,
- complementary clipping devices carried by the front end of the first plate portion and by the back end of the second plate portion which are configured to interconnect the transportation module to at least another transportation module either via the back end of the second plate portion or via the front end of the first plate portion to form an assembly of adjacent interconnected transportation modules movable together.

According to the disclosure, each transportation module is able to be selectively interconnected to one (only one side, front or rear) or two (each side, front and rear) adjacent transportation module(s) to simplify the displacement of each transportation module. It is notably apparent that there is no need to use a dedicated conveyor, the interconnected transportation modules when assembled form an interlinked chain. Moreover, there is no need to use a continuous loop, when treatments are completed, each transportation module may be detached from another to be independently removed (rear end disassembled) from the end of the treatment line and reused (front end assembled) at the beginning of the treatment line. Finally, when a transportation module is defective, it can be replaced by another one in an easy way, for example after or before any cleaning cycle without stopping the cleaning processing of the other transportation modules.

The disclosure may also include one or more of the following optional features, taken alone or in combination.

The first plate portion and the second plate portion may be for example fixed together.

The transportation module may comprise for example two bars fixed on respective side ends of the first and the second plate portions.

The transportation module may comprise at least one bridge portion between the first plate portion and the second plate portion, the at least one bridge portion and the first and second plate portions being realized in one piece.

The clipping device of the front end of the first plate portion may have at least one connection cylinder presenting on its skirt a lateral spring loaded pin movable between a deployed position and a retracted position.

The clipping device of the back end of the second plate portion may have at least one cylindrical hole in which a connection cylinder can fit and a lateral bore configured to receive a lateral spring loaded movable pin of another transportation module in the deployed position in order to connect the transportation module to said another transportation module. The lateral bore is for example configured to receive a control pin in order to push the spring loaded movable pin in the retracted position in order to disconnect the transportation module from said another transportation module.

The cylindrical hole may be a cylindrical blind hole having a frustoconical entry shape for guiding the lateral spring loaded movable pin of said another transportation module from the deployed position to the retracted position.

The at least one ophthalmic article holder protruding into the holding space may comprise at least one spring loaded retractable holding fork between a gripping position and a retractable position, the at least one spring loaded retractable holding fork being carried by the back end of the first plate portion or by the front end of the second plate portion.

An ophthalmic article holder may comprise for example two spring loaded retractable holding forks facing each other, one being carried by the back end of the first plate portion and the other being carried by the front end of the second plate portion, both spring loaded retractable holding forks can be configured to move one towards the other in the gripping position.

The at least one spring loaded retractable holding fork may comprise four tines, two inner tines having ends bent protruding outwardly with regard to the retraction direction of the spring loaded retractable holding fork to push against the ophthalmic article edges in the gripping position and two outer tines having ends which protrude more in the holding space than the ends of the two inner tines and in the opposite direction of the ends of the two inner tines to support the ophthalmic article in the gripping position.

The first and the second plate portions can be made of a plastic material, in particular polyethylene.

Another object of the disclosure relates to a cleaning machine for cleaning ophthalmic articles comprising at least one cleaning station configured to carry out at least one cleaning process to at least one ophthalmic article disposed in a transportation module as described above, wherein the cleaning station comprises two sides walls with sealed slots for entering / exiting a transportation module with respect to the cleaning station, the length of the transportation module being longer than the distance between the sealed slots.

According to the disclosure, each transportation module is able to suspend at least one ophthalmic article in each cleaning station with an improved sealing. It is notably apparent that consumption of cleaning agent are thus reduced (no or very few cleaning agent is transferred when transportation module is removed from the cleaning station) and rinsing or drying are improved (the cleaning station with inserted transportation module forms a small closed volume with no or very limited expelled fluid).

Moreover, there is no need to use a continuous loop, when treatments are completed, each transportation module may be detached from another to be independently displaced from the end of the treatment line (discharging station) to the beginning of the treatment line (charging station) allowing a very compact footprint for the cleaning device. Thus, cleaning processing steps may have, advantageously according to the disclosure, an independent displacement (of used adjacent interconnected transportation modules) regarding the return displacement (of each unused non-connected transportation module) allowing an optimal management of the number of required transportation modules.

Finally, when a transportation module is defective, it can be replaced by another one in an easy way, for example after or before any cleaning cycle (all treatments) notably when it is displaced from the end of the treatment line to the beginning of the treatment line without stopping the cleaning processing of the other transportation modules.

The disclosure may also include one or more of the following optional features, taken alone or in combination.

The sealed slots can be equipped with a double lipped seal configured to be in touch with the first or second plate portion of the transportation modules to keep fluids inside the cleaning station.

The cleaning machine may comprise at least four cleaning stations, one cleaning station with rotary brushes, two cleaning stations for rinsing and one cleaning station for drying.

The cleaning machine may comprise guiding rails with rollers which span at least over all cleaning station for guiding the translation and transport of interconnected transportation modules.

The cleaning machine can further comprise at least one actuator for pushing and/or pulling interconnected transportation modules through the cleaning stations.

The cleaning machine may further comprise an assembly and charging station disposed upstream in a transportation direction, the cleaning station(s) and configured for charging ophthalmic articles to be cleaned in a transportation module and for connecting a charged transportation module to a downstream disposed further transportation module disposed in a cleaning station situated downstream.

The cleaning machine further may comprise a separation and discharging station disposed downstream the cleaning station(s) and configured for discharging cleaned ophthalmic articles from a transportation module and for separating a transportation module from a transportation module placed in a cleaning station situated upstream.

The separation and discharging station can comprise at least one motorized control pin configured to push the spring loaded movable pin of the transportation module in the retracted position in order to disconnect two transportation modules from each other.

The cleaning machine may further comprise a return station comprising a pick-up device, an extendable return conveyor and a putting device, the pick-up device being configured to pick-up a transportation module for placing it on one end of the extendable return conveyor, the extendable return conveyor being disposed above the cleaning stations and configured to convey a transportation module upstream in direction to the assembly and charging station, the putting device being configured to place a transportation module in the assembly and charging station.

The cleaning machine may comprise at most for each station one transportation module.

Finally, another object of disclosure relates to a method for running a cleaning machine as set out above, wherein the transportation modules are moved back-and-forth during a prescribed treatment cycle time by pulling and pushing on one end of assembled transportation module.

According to the disclosure, the interconnected transportation modules when assembled form an interlinked chain. Thus, the downstream transportation module for each successive cleaning step is successively used to displace all upstream adjacent interconnected transportation modules. The displacement is thus simplified and require only one actuator. Moreover, back-and-forth movements during cleaning improve the effectiveness of the cleaning process.

The disclosure may also include one or more of the following optional features, taken alone or in combination.

During a cleaning cycle, a transportation module can be charged with ophthalmic articles to be cleaned.

During a cleaning cycle, a transportation module can be discharged from cleaned ophthalmic articles.

During a cleaning cycle, a discharged transportation module can be returned to the assembly and charging station.

### BRIEF DESCRIPTION OF THE DRAWINGS

Other features and advantages of the present disclosure will appear more clearly upon reading the following detailed description, made with reference to the annexed drawings, provided as a non-limited description, in with:
- figure 1 shows in a perspective view an example of an embodiment of a transportation module according to the present disclosure,
- figure 2 is a cross sectional top view of the transportation module of figure 1,
- figure 3 is a perspective view of a detail concerning the ophthalmic article holder of the transportation module of figure 1,
- figure 4 is a side view of a detail concerning the ophthalmic article holder of the transportation module of figure 1,
- figure 5 is a cross sectional top view of a detail concerning a front end and a back end of two successive transportation modules to be connected,
- figure 6 is perspective view of a detail of figure 1,
- figure 7 is perspective view of another detail of figure 1,
- figure 8 is a schematic simplified view of a cleaning machine according to the present disclosure,
- figure 9 is a perspective view of a detail of the cleaning machine of figure 8,
- figure 10 is a perspective schematic view of some conveying details of the cleaning machine of figure 8,
- figure 11 is a perspective schematic view of some details of the cleaning machine of figure 8,
- figure 12 is a perspective schematic view of some other details of the cleaning machine of figure 8,
- figure 13 shows a simplified drawing of two cleaning stations with two connected transportation modules in-between, and
- figure 14 shows a detail in between two cleaning stations of the cleaning machine.

### DETAILED DESCRIPTION OF THE PREFERRED EMBODIMENTS

The embodiment(s) in the following description is(are) only to be considered as example(s). Thus, the disclosure is not limited to these embodiments. In the various figures, the same or similar elements bear the same references, optionally added with an index. The description of their structure and their function is therefore not systematically restated.

It is to be understood that the terms so used are interchangeable under appropriate circumstances and that the embodiments of the disclosure described herein are capable of operation in other orientations than described or illustrated herein. In addition, a feature described in relationship with one embodiment may also concern another embodiment even if this is not mentioned expressively. Simple features of different embodiments may also be combined to provide further realizations.

It is to be noticed that the term "comprise(s)", "include(s)", "have", "has", "can", "contain(s)", and variant thereof, notably used in the claims, should not be interpreted as being restricted to the means listed thereafter. It does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present disclosure, the only relevant components of the device are A and B.

By "upstream" or "downstream" of two elements or stations, one refers to the transportation direction T in the cleaning machine. Thus, for example, a first station is disposed upstream of a second station when the transported ophthalmic articles pass first through the first station with its specific treatment and then through the second station with its specific treatment.

The term "ophthalmic article" is specifically understood to mean a lens, corrective or otherwise, that can be used as spectacle glass, for spectacles for example, particularly sunglasses, goggles, visors or the like.

Wearing sunglasses, in particular when it is very bright outside, is medically recommended to preserve one's long-term vision potential and also for safety reasons, for example when driving.

The term "cleaning" in the sense of the present disclosure is to be understood to include in particular a mechanical treatment with a cleaning element, such as a brush and/or a treatment using for example a cleaning agent, for example by blasting, rinsing or dipping, and/or a treatment by exposure to a stream of air or gas, for example by a blower and/or for drying.

The cleaning of the ophthalmic article can comprise one or more cleaning processes, in particular successive processing steps which may take place according to a predefined sequence.

A cleaning process in the sense of the present disclosure is preferably a defined process, in particular in terms of time, in which cleaning is carried out like for example by mechanical treatment with a cleaning element and/or by the action of a liquid and/or by exposure to a stream of air or gas.

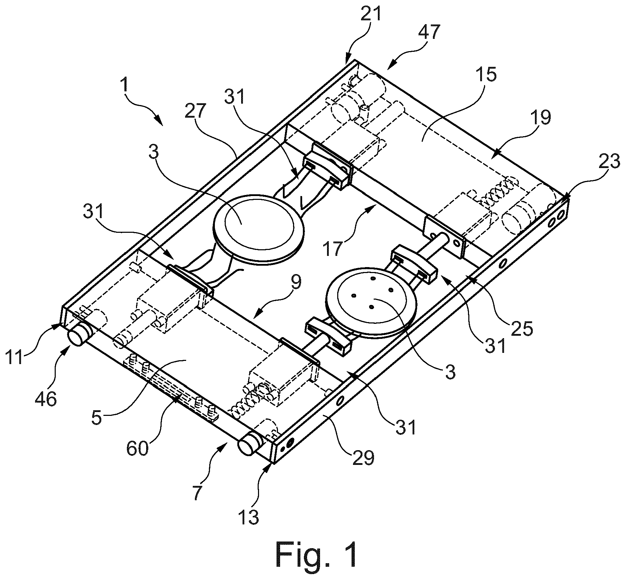

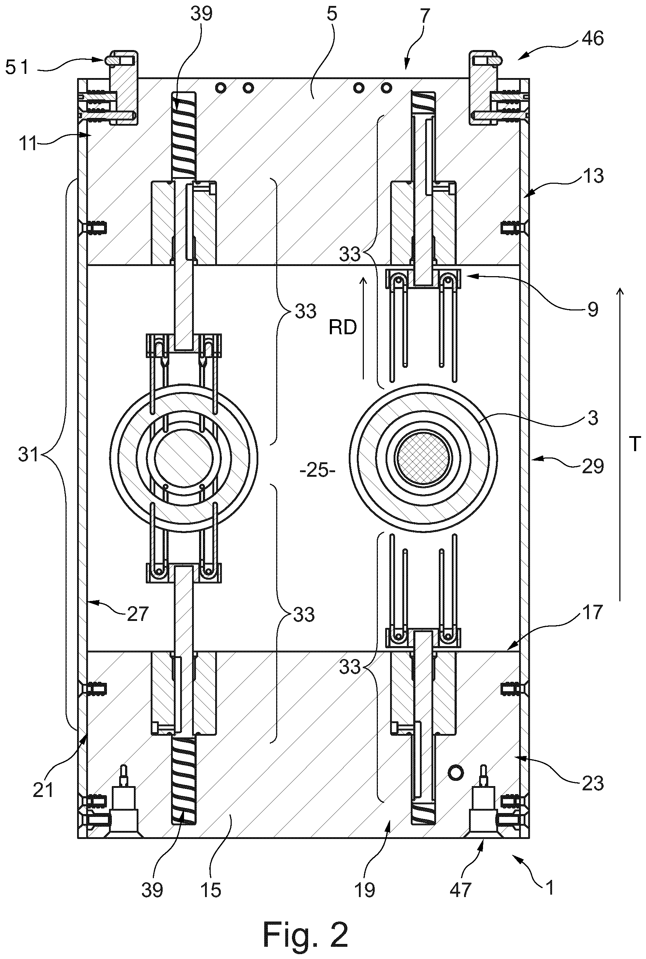

Figures 1 and 2 show a transportation module 1 configured to hold at least one, in the present example two ophthalmic articles 3 to be cleaned in a cleaning machine which will be detailed later.

The transportation module 1 has a general form of a tray and comprises:
- a first plate portion 5 having a front end 7, a back end 9 and two side ends 11 and 13,
- a second plate portion 15 having a front end 17, a back end 19 and two side ends 21 and 23.

As shown in figures 1 and 2, the second plate portion 15 is aligned with the first plate portion 5 and disposed at a fixed distance from the first plate portion 5 for defining a holding space 25 between the back end 9 of the first plate portion 5 and the front end 17 of the second plate portion 15.

The first 5 and the second 15 plate portions may be made of a plastic material, in particular polyethylene. The surface may be as smooth as possible and liquid / water repellent.

According to the exemplary embodiment shown in figures 1 and 2, the first plate portion 5 and the second plate portion 15 are fixed together. This can be done for example by two bars 27 and 29, for example made in metal, fixed on respective side ends 11, 13 and 21, 23 of the first 5 and the second 15 plate portions, in particular by screwing.

According to an alternative embodiment not shown, the transportation 1 may further comprise at least one bridge portion between the first plate 5 portion and the second plate portion 15.

The at least one bridge portion and the first and second plate portions according to this embodiment may be realized in one piece, for example in plastic by moulding like for example injection moulding. According to a further development, the side ends 11, 13 and 21, 23 extend to form two bridges connecting the first plate portion to the second plate portion 15 in a similar way as the side bars described above. According to another further development, one may take one rectangular tray in plastic material and cut out the holding space 25.

As can be seen in figure 1, the transportation module 1 also comprises at least one, here two ophthalmic article holders 31 which are protruding into the holding space 25.

As can be seen in figure 2, the ophthalmic article holder 31 comprises at least one, in this specific embodiment two spring loaded retractable holding forks 33 carried by the back end 9 of the first plate portion 5 and/or by the front end 17 of the second plate portion 15. Each spring loaded retractable holding fork 33 is configured to move between a gripping position and a retractable position. The spring loaded retractable holding fork 33 is configured to move along a retraction direction RD of the holding fork 33 (see arrow 41) which may be parallel to the transportation direction T.

More specifically, one ophthalmic article holder 31 comprises in particular two spring loaded retractable holding forks 33 facing each other, one being carried by the back end 9 of the first plate portion 5 and the other being carried by the front end 17 of the second plate portion 15, both spring loaded retractable holding forks 33 being configured to move one towards the other in the gripping position.

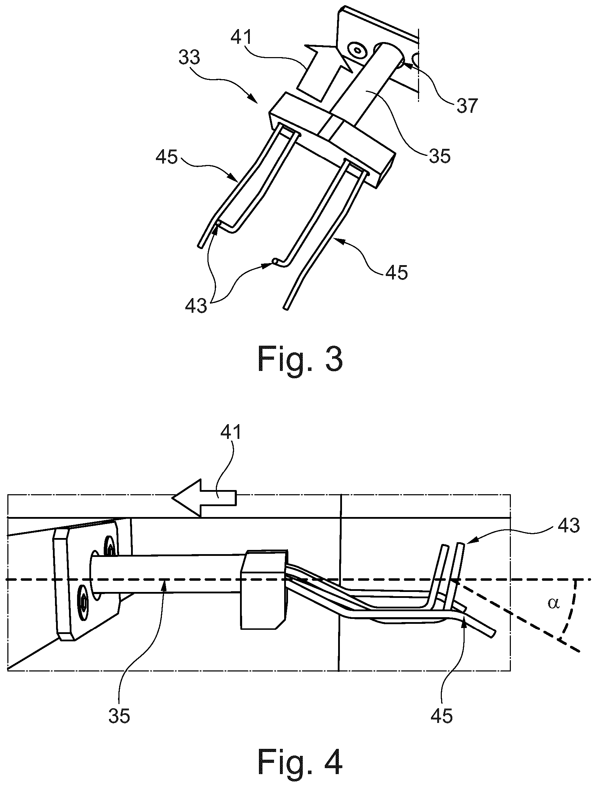

As shown in figure 2 and to some extent on figure 3, a cylinder shaped base part 35 of the spring loaded retractable holding fork 33 is mounted in a cylindrical recess 37 of the first / second plate portion 5, 15. A spring, for example a helical pushing spring 39 is disposed in the recess 37 in order to push the spring loaded retractable holding fork 33 in direction of the centre of the holding space 25.

The fact that both spring loaded retractable holding forks 33 of an ophthalmic article holder 31 are submitted to spring forces is an advantage because when in a cleaning station a back-and-forth movement is applied, in particular in a mechanical cleaning station with brushes, the ophthalmic article 3 may undergo also slight relative back-and-forth movements. Spring forces limit the constraints applied by the spring loaded retractable holding forks 33 to the ophthalmic article 3 during cleaning and thus, reduce the risk of damages on the ophthalmic article 3 during cleaning.

In other not shown alternatives, it may be foreseen that the ophthalmic article holder 31 comprises two forks 33 facing each other as described, but only one being a spring loaded retractable holding fork 33, the other holding fork 33 may be static.

As can be seen in detail in figure 3, a spring loaded retractable holding fork 33 comprises in particular four tines, two inner tines 43 and two outer tines 45. Inner tines 43 have ends protruding outwardly with regard to the retraction direction RD (see arrow 41) of the holding fork 33, in particular having ends bent nearly perpendicular to the retraction direction RD, to push against the ophthalmic article 3 edges in the gripping position. Outer tines 45 have ends which protrude more in the holding space 25 than the ends of the two inner tines 43 and which are bent with an angle α (see figure 4) with respect to the retraction direction RD and in the opposite direction of the ends of the two inner tines 43, to support the ophthalmic article 3 in the gripping position.

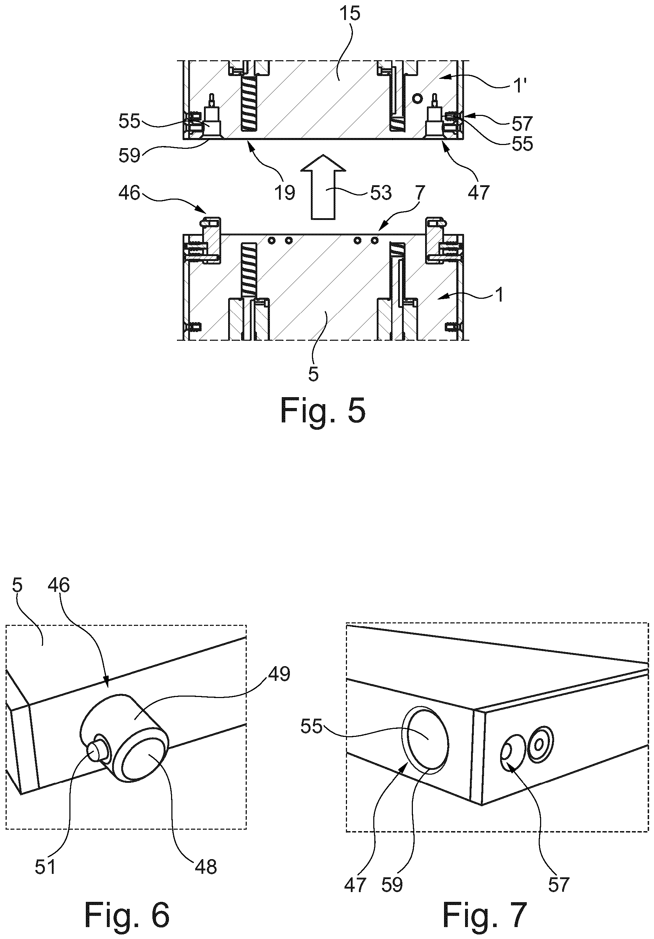

Referring once again to figures 1 and 2 and further to figure 5, the transportation module 1 further comprises complementary clipping devices 46, 47 carried on the one hand by the front end 7 of the first plate portion 5 and on the other hand, by the back end 19 of the second plate portion 15.

The complementary clipping devices 46, 47 are configured to connect the transportation module 1 to at least another transportation module 1' either via the back end 19 of the second plate portion 15 or via the front end 7 of the first plate portion 5.

The front end 7 of the first plate portion 5 may have two clipping devices 46 shown in detail in figure 6. Clipping device 46 comprises a connection cylinder 48 or stud presenting on its outer skirt 49 a lateral spring loaded pin 51 movable between a deployed position and a retracted position. The lateral spring loaded pin 51 is orientated perpendicular to the transportation direction T indicated by arrow 53 in figure 5.

The back end 19 of the second plate portion 15 may also have two complementary clipping devices 47 shown in detail in figure 7. Clipping device 47 comprises a cylindrical hole 55 in which the connection cylinder 48 can fit and a lateral bore 57 in order to facilitate docking and undocking of two transportation modules 1, 1'.

The cylindrical hole 55 may be a cylindrical blind hole having a frustoconical entry shape 59 for guiding the lateral spring loaded movable pin 51 of said another transportation module 1' from the deployed position to the retracted position.

The lateral bore 57 (also shown in figure 7) is configured to receive the lateral spring loaded movable pin 51 of another transportation module 1' in the deployed position in order to connect the transportation module 1 to said another transportation module 1'. It is also configured to receive a control pin (not shown) in order to push the spring loaded movable pin 51 in the retracted position allowing thus to disconnect the transportation module 1 from said another transportation module 1'.

As shown in figure 1, the front end 7 of the first plate portion 5 may also have a slot 60 for example extending in a transverse direction, meaning perpendicular to the transportation direction T (arrow 53) and made on the underside of the first plate portion 5. This slot 60 is used for pulling and pushing the transportation module 1 as will be described beneath.

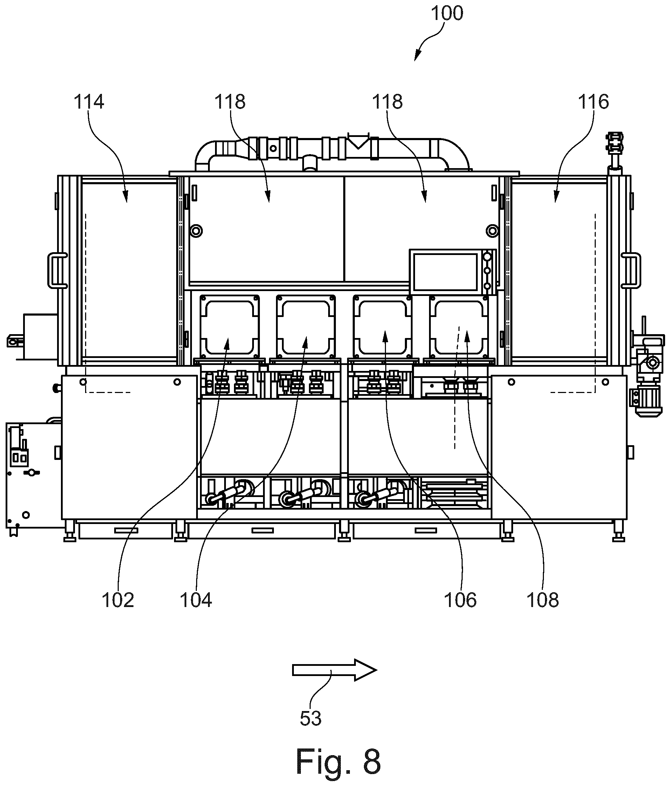

The transportation module 1 as described above is configured and conceived to be used with a cleaning machine 100 for cleaning ophthalmic articles 3 as shown in figures 8-13.

The cleaning machine 100 comprises at least one, in the present example four cleaning stations 102, 104, 106 and 108.

Each of the cleaning stations 102, 104, 106 and 108 is configured to carry out at least one cleaning process to at least one ophthalmic article 3 disposed in a transportation module 1.

In the present example, cleaning station 102 comprises for example rotary brushes for mechanical cleaning in addition with liquid agent. Cleaning stations 104 and 106 are rinsing stations and cleaning station 108 is a drying station with blowers. The transportation direction T for the cleaning process (see arrow 53 on the figures) is linear and goes from cleaning station 102 to cleaning station 108.

From the above, in particular figures 5-7 and 13, it is clear that the transportation modules 1 can be clipped/connected together in a releasable way to form an assembly of adjacent interconnected transportation modules 1. One of the ideas behind the disclosure is that pushing or pulling on one of the transportation modules 1 located at one of the ends of the interconnected transportation modules 1 will make move all transportation modules 1 together in the same way.

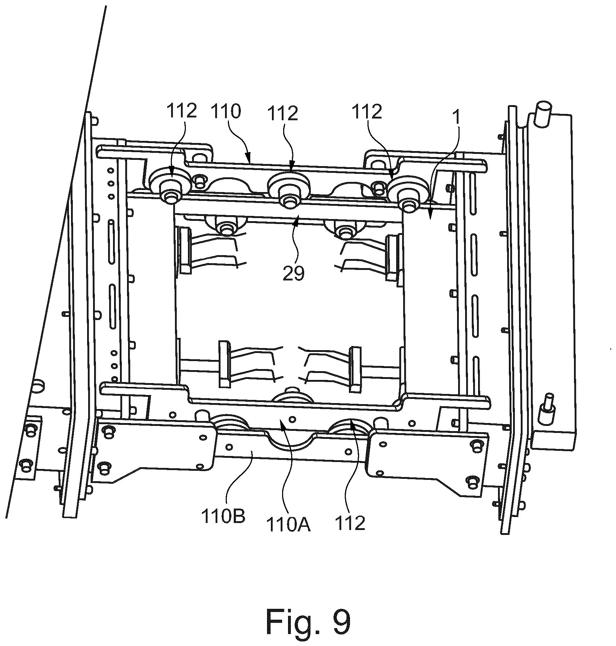

In order to do so and as shown in figure 9, the cleaning machine 100 comprises guiding rails 110 with rollers 112 which span at least over all cleaning station 102-108 for guiding the translation and transport of interconnected transportation modules 1. In the present example, the guiding rails 110 comprise an upper guiding rail 110A and a lower guiding rail 110B. The rollers 112 on the upper guiding rail 110A are disposed in an alternating manner with respect to the rollers 112 of the lower guiding rail 110B. The rollers 112 are in contact in particular with the lateral bars 27 and 29 of the transportation module 1. They are for example made of the same material as the first 5 and the second 15 plate portions, meaning they may be made of a plastic material, in particular polyethylene.

Returning back to figure 8, the cleaning machine 100 may comprise further to the cleaning stations 102-108 :
- an assembly and charging station 114 disposed upstream the cleaning stations 102-108 in the transportation direction T,
- a separation and discharging station 116 disposed downstream the cleaning stations 102-108, and
- a return station 118 in order to transport individual disconnected transportation modules 1 from the separation and discharging station 116 to the assembly and charging station 114 for reuse.

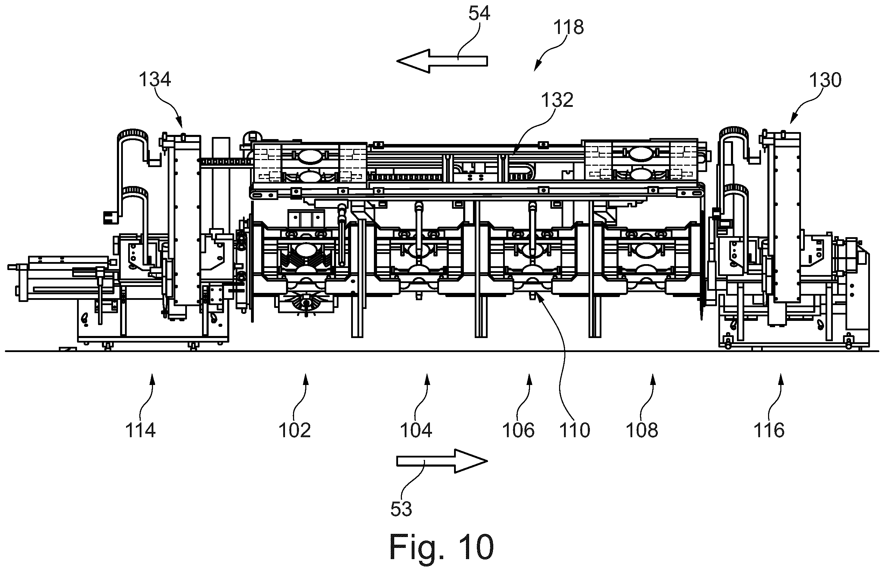

Figure 10 shows some details of the guiding rails 110 for conveying the transportation modules 1 according to the transportation direction T (arrow 53) between stations 114 and 116 and then back according a return direction (see arrow 54) through the return station 118. In figure 10, reference numbers 102 to 118 are reproduced to show the positions of these stations with respect to the guiding rails 110.

The assembly and charging station 114 is configured for charging ophthalmic articles 3 to be cleaned in a transportation module 1 and for connecting a charged transportation module 1 to a downstream disposed further transportation module 1' disposed in a cleaning station 102 situated downstream. It comprises in particular robot arms with suction organs to take and place ophthalmic articles 3 in the transportation modules 1.

The separation and discharging station 116 is configured for discharging cleaned ophthalmic articles 3 from a transportation module 1 and for separating a transportation module 1 from a transportation module 1 placed in a cleaning station 108 situated upstream. It comprises in particular robot arms with suction organs to take and place ophthalmic articles 3 out of the transportation modules 1.

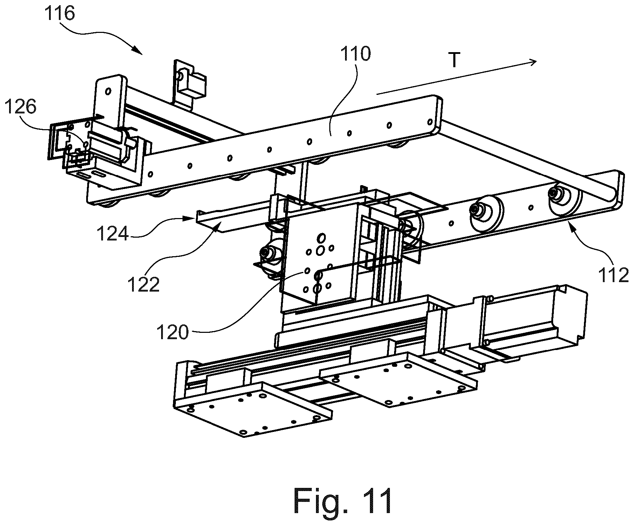

In figure 11, is shown an actuator 120 for pushing and/or pulling interconnected transportation modules 1 through the cleaning stations 102-108. The actuator 120 comprises a lever 122 comprising at its free end a hook 124 which is configured to be engaged with a slot 60 of a transportation module 1. More specifically, hook 124 is upwards directed in order to penetrate from underneath into slot 60. To this extent, the actuator 120 can realize an up-and-down movement for engagement of the hook 124 with slot 60 and for back-and-forth movement during a prescribed treatment cycle time when the hook is engaged in the slot 60. In the present example, this actuator 120 is disposed at the level of and underneath the separation and discharging station 116 which is only partly represented in figure 11.

As can be seen also in figure 11, the separation and discharging station 116 comprises at least one, in fact two motorized control pins 126 configured to push the spring loaded movable pin 51 of the transportation module 1 in the retracted position in order to disconnect two transportation modules from each other.

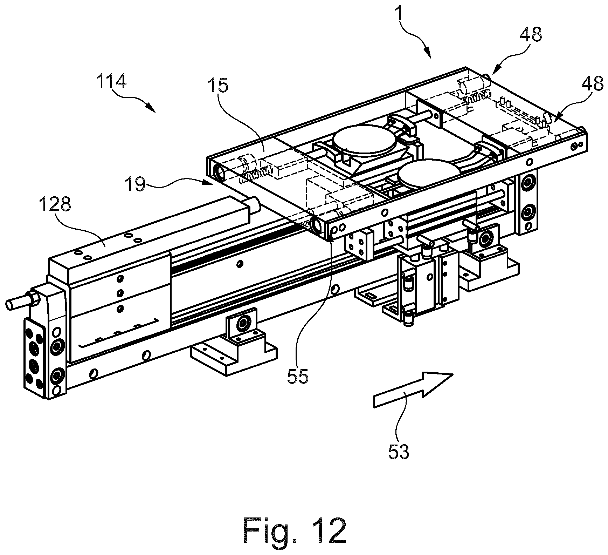

Figure 12 shows a part of the assembly and charging station 114 disposed upstream the cleaning stations 102-108. In particular figure 12 shows a connecting actuator 128 which is configured to make a pushing movement in the transportation direction T and push on the back end 19 of the second plate portion 15.

The stroke of the connecting actuator 128 is such that it pushes first against the back end 19 of a subsequent transportation module 1 which is disposed in the cleaning station 102 and therefore interconnects with that subsequent transportation module by the fact that the connection cylinders 48 are pushed into the cylindrical holes 55 of the subsequent transportation module and the lateral spring loaded pins 51 engage with the correspondent lateral bores 57 in order to dock two transportation modules 1, 1' together.

During the stroke of connecting actuator 128, the back-and-forth actuator 120 is disengaged from slot 60 and in a lower position.

The stroke of the connecting actuator 128 is furthermore such that a transportation module 1 which was in the cleaning station 108 is pushed in the separation and discharging station 116.

Before engaging the back-and-forth actuator 120 with a slot 60 of a transportation module 1 which is located in the last cleaning station 108, the two motorized control pins 126 are activated in order to push the spring loaded movable pin 51 of the transportation module 1 in the retracted position allowing thereby to disconnect the transportation module 1' in cleaning station 108 from the transportation module in the separation and discharging station 116.

As can be seen on figure 10, the return station 118 comprises a pick-up device 130, an extendable return conveyor 132 and a putting device 134.

The pick-up device 130, for example a robot, is configured to pick-up a transportation module 1 and for placing it on one end of the extendable return conveyor 132.

The extendable return conveyor 132 may be disposed above the cleaning stations 102-108 and configured to convey transportation modules 1 upstream, in the return direction 54 to the assembly and charging station 114. The conveyor 132 is "extendable", because it has a base conveyor with belts having a length spanning from the entry of cleaning station 102 to the exit of the cleaning station 108 and a drive module of the base conveyor which can drive one end of the base conveyor to be at the level of the assembly and charging station 114 and the other end to be at the level of the separation and discharging station 116.

The putting device 134 is configured to pick up a returned transportation module 1 from the extendable return conveyor 132 and to place the transportation module in the assembly and charging station 114.

It should be noticed that the transportation modules 1 are moved back-and-forth during a prescribed treatment cycle time through actuator 120. They stay therefore during the prescribed treatment cycle time in one cleaning station 102, 104, 106 or 108.

The cleaning process is only to some extent interrupted, when the actuator 120 is disengaged and in a lower position so that no back-and-forth movement is applied at that moment and when the connecting actuator 128 moves forward on the transportation direction 53 for connecting two transportation modules 1 together as described above and pushes the transportation module 1 which was in the cleaning station 108 in the separation and discharging station 116. One may therefore understand that idle time of the cleaning machine 100 is very much reduced and the efficiency of the present cleaning machine is quite high.

Furthermore, the cleaning machine 100 may comprise at most for each station one transportation module 1, for example six transportation modules 1 which is an advantage with respect to prior art. In fact, less ophthalmic article holders 31 are necessary for the ophthalmic articles 3 because in prior art, the lens holding devices were mounted on a chain and the whole chain, also the return part, needs to be equipped with lens holding devices. In addition, in case a transportation module 1 as described above is damaged, only the concerned transportation module 1 needs to be replaced by another one and the cleaning machine 100 can return in production, meaning cleaning, quite quickly. On the contrary in prior art, in case of the problem of the chain and/ or holder devices of the chain, the cleaning machine needs to be stopped completely until the maintenance and/ or reparation has been carried out.

A further aspect of the cleaning station 100 and the transportation modules 1 concerns the separation of the cleaning stations 102-108 with respect to each other.

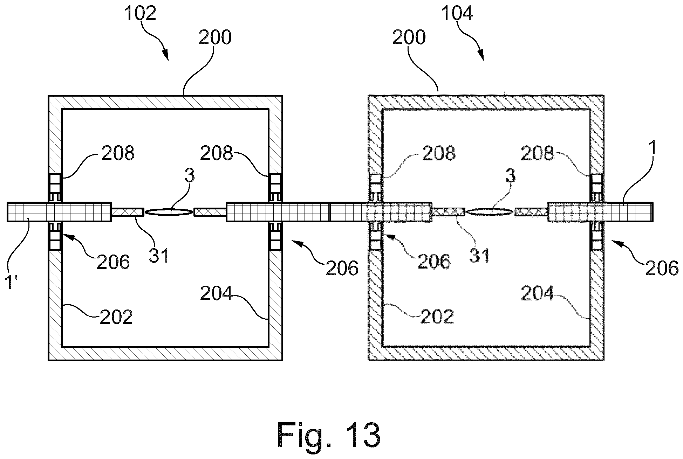

Figure 13 shows a simplified drawing of two cleaning stations 102 and 104 for example with two connected transportation modules 1, 1' in-between.

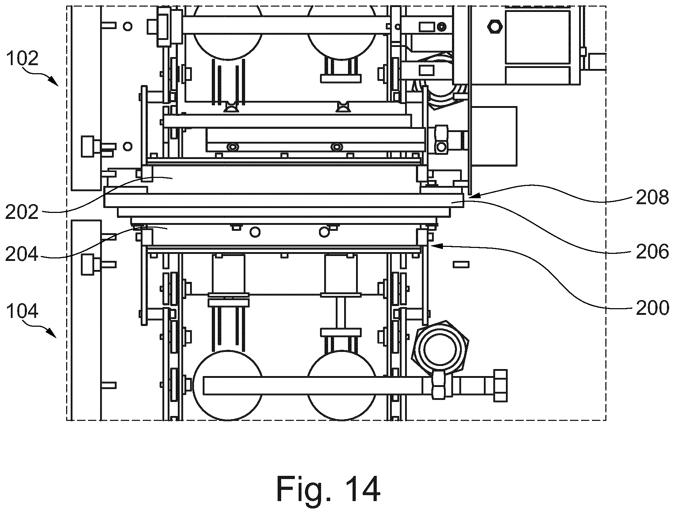

Figure 14 shows in detail certain aspects at the junction of two cleaning stations; for example, cleaning station 102 and cleaning station 104.

Referring to figures 13 and14, each cleaning station comprises a casing 200 with two side walls 202, 204 with sealed slots 206 for entering / exiting a transportation module 1 with respect to the cleaning station 102 or 104.

The length of the transportation module 1 is longer than the distance between the sealed slots 206.

The sealed slots 206 are equipped with a double lipped seal 208 configured to be in touch with the first or second plate portion 5, 15 of the transportation modules 1 to keep fluids inside the cleaning station 102 or 104.

This allows to reduce the quantity of liquids agents to be used and reduces in particular a possible contamination of downstream located cleaning stations for example with such liquid cleaning agents.

It is understood that the cleaning machine 100 comprises a not represented control unit, like a computer with a processor, memories, inputs and outputs and a specific software program to control the overall functioning of the cleaning machine 100, and in particular the actuators, conveyors, robot arms, brushes etc.

As already described above, during running of a cleaning machine 100 the transportation modules 1 may be moved back-and-forth within the cleaning stations 102, 104, 106, 108 during a prescribed treatment or cleaning cycle time by pulling and pushing on one end of assembled transportation module 1 and the ophthalmic articles 3 supported by the transportation modules 1 which are located within the cleaning stations 102, 104, 106, 108 are cleaned.

At the same time during a cleaning cycle,
- a transportation module 1 is charged with ophthalmic articles 3 to be cleaned, and/or,
- a transportation module 1 is discharged from cleaned ophthalmic articles 3, and/or,
- a discharged transportation module 1 is returned to the assembly and charging station 114.

Thus, one understands that idle time is limited and the throughput of the cleaning machine 100 is optimized.

Of course, the present disclosure is not limited to the embodiments and variants presented but may be subject to various other embodiments and/or variants, which will be apparent to a person skilled in the art. Thus, while some embodiments described herein include some but not other features included in other embodiments, combinations of features of different embodiments are meant to be within the scope of the disclosure, and form different embodiments, as would be understood by a person skilled in the art.

### REFERENCE NUMERALS

1 - transportation module
3 - ophthalmic article
5 - first plate portion
7 - front end of the first plate portion
9 - back end of the first plate portion
11 - side end of the first plate portion
13 - side end of the first plate portion
15 - second plate portion
17 - front end of the second plate portion
19 - back end of the second plate portion
21 - side end of the second plate portion
23 - side end of the second plate portion
25 - holding space
27 - bar
29 - bar
31 - ophthalmic article holder
33 - spring loaded retractable holding fork
35 - base part
37 - cylindrical recess
39 - spring
41 - arrow of retraction direction
43 - inner tines
45 - outer tines
46 - clipping device
47 - clipping device
48 - connection cylinder
49 - outer skirt
51 - pin
53 - arrow of transportation direction
54 - return direction
55 - cylindrical hole
57 - lateral bore
59 - frustoconical entry shape
60 - slot
100 - cleaning machine
102 - cleaning station
104 - cleaning station
106 - cleaning station
108 - cleaning station
110 - guiding rails
110A - upper guiding rail
110B - lower guiding rail
112 - rollers
114 - assembly and charging station
116 - separation and discharging station
118 - return station
120 - actuator
122 - lever
124 - hook
126 - motorized control pin
128 - connecting actuator
130 - pick up device
132 - extendable return conveyor
134 - putting device
200 - casing of a cleaning station
202 - side wall
204 - side wall
206 - sealed slot
208 - lipped seal
RD - retraction direction
T - transportation direction

## Claims

1. Transportation module (1) configured to hold at least an ophthalmic article (3) to be cleaned in a cleaning machine (100) comprising:
- a first plate portion (5) having a front end (7), a back end (9) and two side ends (11, 13),
- a second plate portion (15) having a front end (17), a back end (19) and two side ends (21, 23), the second plate portion (15) being aligned with the first plate portion (5) and disposed at a fixed distance from the first plate portion (5) for defining a holding space (25) between the back end (9) of the first plate portion (5) and the front end (17) of the second plate portion (15),
- at least one ophthalmic article holder (31) protruding into the holding space (25),
- complementary clipping devices (46, 47) carried by the front end (7) of the first plate portion (5) and by the back end (19) of the second plate portion (15) which are configured to interconnect the transportation module (1) to at least another transportation module (1') either via the back end (19) of the second plate portion (15) or via the front end (7) of the first plate portion (5) to form an assembly of adjacent interconnected transportation modules (1, 1') movable together.

2. Transportation module (1) according to the preceding claim, wherein the first plate portion (5) and the second plate portion (15) are fixed together, in particular when the transportation module (1) comprises two bars (27, 29) fixed on a respective side ends (11, 13, 21, 23) of the first (5) and the second (15) plate portions.

3. Transportation module (1) according to claim 1, wherein it further comprises at least one bridge portion between the first plate portion (5) and the second plate portion (15), the at least one bridge portion and the first and second plate portions being realized in one piece.

4. Transportation module (1) according to any one of the preceding claims, wherein the clipping device (46) of the front end (7) of the first plate portion (5) has at least one connection cylinder (48) presenting on its skirt (49) a lateral spring loaded pin (51) movable between a deployed position and a retracted position and/or wherein the clipping device (47) of the back end (19) of the second plate portion (15) has at least one cylindrical hole (55) in which a connection cylinder (48) can fit and a lateral bore (57) configured to receive a lateral spring loaded movable pin (51) of another transportation module (1') in the deployed position in order to connect the transportation module (1) to said another transportation module (1'), the lateral bore (57) being configured to receive a control pin in order to push the spring loaded movable pin (51) in the retracted position in order to disconnect the transportation module (1) from said another transportation module (1').

5. Transportation module (1) according to the preceding claim, wherein the cylindrical hole (55) is a cylindrical blind hole having a frustoconical entry shape (59) for guiding the lateral spring loaded movable pin (51) of said another transportation module (1') from the deployed position to the retracted position.

6. Transportation module (1) according to any one of the preceding claims, wherein the at least one ophthalmic article holder (31) protruding into the holding space (25) comprises at least one spring loaded retractable holding fork (33) between a gripping position and a retractable position, the at least one spring loaded retractable holding fork (33) being carried by the back end (9) of the first plate portion (5) or by the front end (17) of the second plate portion (15).

7. Transportation module (1) according to the preceding claim, wherein one ophthalmic article holder (31) comprises two spring loaded retractable holding forks (33) facing each other, one being carried by the back end (9) of the first plate portion (5) and the other being carried by the front end (17) of the second plate portion (15), both spring loaded retractable holding forks (33) being configured to move one towards the other in the gripping position, the at least one spring loaded retractable holding fork (33) comprises in particular four tines (43,45), two inner tines (43) having ends bent protruding outwardly with regard to the retraction direction (RD) of the spring loaded retractable holding fork (33) to push against the ophthalmic article (3) edges in the gripping position and two outer tines (45) having ends which protrude more in the holding space (25) than the ends of the two inner tines (43) and in the opposite direction of the ends of the two inner tines (13) to support the ophthalmic article (3) in the gripping position.

8. Cleaning machine (100) for cleaning ophthalmic articles (3) comprising at least one cleaning station (102, 104, 106, 108) configured to carry out at least one cleaning process to at least one ophthalmic article (3) disposed in a transportation module (1) according to any one of the claims 1 to 7, wherein the cleaning station (102) comprises two sides walls (202, 204) with sealed slots (206) for entering / exiting a transportation module (1) with respect to the cleaning station (102, 104, 106, 108), the length of the transportation module (1) being longer than the distance between the sealed slots (206).

9. Cleaning machine (100) according to the preceding claim, wherein the sealed slots (206) are equipped with a double lipped seal (208) configured to be in touch with the first (5) or second (15) plate portion of the transportation modules (1) to keep fluids inside the cleaning station (102, 104, 106, 108).

10. Cleaning machine (100) according to the claim 8 or 9, wherein it comprises guiding rails (110) with rollers (112) which span at least over all cleaning station (102, 104, 106, 108) for guiding the translation and transport of interconnected transportation modules (1).

11. Cleaning machine (100) according to any one of the claims 8 to 10, further comprising at least one actuator (120) for pushing and/or pulling interconnected transportation modules (1) through the cleaning stations (102, 104, 106, 108).

12. Cleaning machine (100) according to any one of the claims 8 to 11, further comprising
- an assembly and charging station (114) disposed upstream in a transportation direction (T), the cleaning station(s) (102, 104, 106, 108) and configured for charging ophthalmic articles (3) to be cleaned in a transportation module (1) and for connecting a charged transportation module (1) to a downstream disposed further transportation module (1') disposed in a cleaning station (102) situated downstream, and/or
- a separation and discharging station (116) disposed downstream the cleaning station(s) (102, 104, 106, 108) and configured for discharging cleaned ophthalmic articles (3) from a transportation module (1) and for separating a transportation module (1) from a transportation module (1) placed in a cleaning station (102, 104, 106, 108) situated upstream and/or
- a return station (118) comprising a pick-up device (130), an extendable return conveyor (132) and a putting device (134), the pick-up device (130) being configured to pick-up a transportation module (1) for placing it on one end of the extendable return conveyor (132), the extendable return conveyor (132) being disposed above the cleaning stations (102, 104, 106, 108) and configured to convey a transportation module upstream in direction to the assembly and charging station (114), the putting device (134) being configured to place a transportation module in the assembly and charging station (114).

13. Cleaning machine (100) according to the preceding claim, wherein the separation and discharging station (116) comprises at least one motorized control pin (126) configured to push the spring loaded movable pin (51) of the transportation module (1) in the retracted position in order to disconnect two transportation modules (1) from each other.

14. Method for running a cleaning machine (100) according to any one of the claims 8 to 13, wherein the transportation modules (1) are moved back-and-forth during a prescribed treatment cycle time by pulling and pushing on one end of assembled transportation module (1).

15. Method according to the preceding claim, wherein during a cleaning cycle,
- a transportation module (1) is charged with ophthalmic articles (3) to be cleaned and/or,
- a transportation module (1) is discharged from cleaned ophthalmic articles (3) and/or,
- a discharged transportation module (1) is returned to the assembly and charging station (114).
